# NEUE EUROPÄISCHE PATENTSCHRIFT

(11) **EP 2 993 112 B2**
(45) Veröffentlichungstag und Bekanntmachung des Hinweises auf die Entscheidung über den Einspruch: **16.02.2022**
(45) Hinweis auf die Patenterteilung: 09.01.2019
(21) Anmeldenummer: 14183752.6
(22) Anmeldetag: 05.09.2014
(51) Int. Cl.: B62D 33/02

(54) **Rungensystem für einen Nutzfahrzeug- oder Anhängerdachaufbau**
Post system for a roof structure of a trailer or commercial vehicle
Système de montants pour structure de toit de véhicule utilitaire ou de remorque

(43) Veröffentlichungstag der Anmeldung: 09.03.2016
(73) Patentinhaber: Fliegl, Helmut, 07819 Triptis (DE)
(72) Erfinder: Fliegl, Helmut, 07819 Triptis (DE)
(74) Vertreter: Kramer Barske Schmidtchen Patentanwälte PartG mbB

(56) Entgegenhaltungen:
- EP-A1- 0 263 009
- EP-A1- 1 145 938
- DE-A1- 10 250 463
- DE-B3-102006 004 994
- GB-A- 1 209 255
- US-A1- 2013 240 471

## Beschreibung

### Technisches Gebiet

Die vorliegende Erfindung betrifft allgemein ein Rungensystem für einen Nutzfahrzeug- oder Anhängerdachaufbau. Insbesondere umfasst ein solches Rungensystem eine Runge, an die wenigstens eine Bretttasche lösbar anbringbar ist. Eine solche Bretttasche dient dazu, ein eine seitliche Sicherung bildendes Seitenbrett bzw. -planke in einer zweckmäßigen Höhe über dem Ladeboden des Nutzfahrzeug- oder Anhängers anzuordnen.

### Hintergrund

In der DE 20 2005 017 458 U1 ist eine Runge für einen Nutzfahrzeug- oder Anhängerdachaufbau gezeigt, die in einem Dachprofil verschiebbar ist. Die Runge umfasst einen Laufwagengrundkörper, der durch ein abgewinkeltes Blechprofil gebildet ist. Der Rungengrundkörper soll einfach aufgebaut und mit einem ebenfalls einfach bauenden Laufwagen bestückbar sein. Ferner soll ein Austausch von Laufrollen n einfacher Weise ermöglicht sein.

Eine weitere verschiebbar gelagerte Runge für ein Transportfahrzeug oder einen Transportbehälter ist in der DE 20 2006 009 168 U1 gezeigt. Eine gelenkige Verbindung zwischen dem Rungenkörper und dem Laufwagen mittels Gelenklager soll eine Schwenkbeweglichkeit relativ zum Laufwagen sowohl in Längsrichtung als auch in Querrichtung einer Laufschiene schaffen.

Die EP 1 787 842 A2 lehrt eine Runge für einen Planenaufbau. Bei dieser Runge ist eine Hubeinrichtung vorhanden, bei der mittels eines Betätigungshebels die Rungenlänge veränderbar ist. Die Veränderung der Rungenlänge wird ermöglicht, indem eine Verzahnung an einem Rungenteil vorhanden ist, die ein dem Betätigungshebel zugeordnetes Eingriffsende ansetzen kann.

Bei der in der DE 20 2008 009 871 U1 gezeigten Runge mit Riegeleinrichtung an einem Rungenfuß ist der Rungenfuß mit Riegeleinrichtung am Rungenschuh verriegelbar und an einem relativ zur Runge verschwenkbaren Riegelhebel eine Riegelnase ausgebildet, die in eine korrespondierende Ausnehmung im Rungenschuh in Eingriff bringbar ist. Am Rungenschuh und am Rungenfuß sind in gegenseitigen Eingriff bringbare Führungen ausgebildet.

Die EP 1 587 728 B2 zeigt eine Runge mit integrierter Vorrichtung zur Ladungssicherung. Diese hierin gezeigte Runge ist verschiebbar ausgebildet und weist eine längenseitliche Sicherung auf. Hierzu sind bevorzugt an beiden Seitenflächen eines geradlinigen Mittelabschnitts der Runge eine etwa gleiche Anzahl an schlaufenförmigen Auskragungen ausgebildet. Vorzugsweise sind die Auskragungen angeschweißt. Dadurch soll bei formschlüssiger Verladung in vorteilhafter Weise verhindert werden, dass kinetische Energie frei wird und es zwangsläufig zur Verformung des Aufbaus kommen kann.

Eine Runge zum Einbau zwischen einem Obergurt und einem Gestellrahmen eines Fahrzeugs ist in der DE 296 14 477 U1 gezeigt. Diese verschiebbare Runge weist eine Arretierungsvorrichtung am unteren Rungenende auf.

Auch die DE 697 07 892 T2 zeigt eine verschiebbare Runge mit Klemmvorrichtung.

Aus der EP 1 145 938 A1 ist eine Steckverbindung zwischen einer Bretttasche und einer Runge für ein Nutzfahrzeug gezeigt. Die Runge weist eine Lochreihe mit trapezförmigen Löchern auf, in die auf einer Rückseite der Bretttasche als Nasen ausgebildete Haken eingehängt werden.

Aus der DE 10 2006 004 994 B3 ist ein Rungensystem für Nutzfahrzeugaufbauten bekannt, bei dem als Planlattentaschen bezeichnete Bretttaschen mit definierten Lochbildern versehen sind, um diese an einer Runge in gewünschter Höhe lösbar befestigen zu können.

Aus der US 2013/0240471 A1 ist ein Regalsystem bekannt, bei dem Querstreben zur Halterung von Regalböden in schlüssellochförmige Löcher, die in einem Regalfuß ausgebildet sind, eingehängt werden können.

Ausgehend von diesem Stand der Technik besteht das technische Problem darin, ein Rungensystem bereitzustellen, bei dem eine Höhenverstellung von Seitenbrettern auf einfache, kostengünstige und stabile Art und Weise möglich ist.

### Darstellung der Erfindung

Die vorliegende Erfindung betrifft ein Rungensystem für den Aufbau eines Nutzfahrzeug- oder Anhängerdachaufbaus. Dieses umfasst insbesondere eine Runge mit einem länglichen Hauptträger, der in Längsrichtung des Hauptträgers ausgerichtet wenigstens eine Lochreihe mit mehreren schlüssellochförmigen Löchern aufweist. Die einzelnen Löcher einer Lochreihe setzen sich jeweils aus einem Kreisloch mit einem Lochdurchmesser und einem Langloch mit einer Breite, die kleiner ist als der Lochdurchmesser, zusammen. Das Rungensystem umfasst ferner wenigstens eine in die Runge mittels wenigstens zwei Einhängebolzen einhängbare Bretttasche für ein Seitenbrett des Aufbaus. Jeder Einhängebolzen weist einen Bolzenschaft auf, der einen Bolzenschaftdurchmesser hat, der kleiner ist als die Langlochbreite eines Langlochs. Am Ende des Bolzenschaftes ist ein Bolzenkopf vorhanden, der einen Kopfdurchmesser hat, der größer ist als der Bolzenschaftdurchmesser, aber kleiner als der Lochdurchmesser und größer als die Langlochbreite eines Lochs der Lochreihe im Hauptträger ist. Es ist ferner ein im Hauptträger in Längsrichtung verschiebbar angeordnetes Trägerelement zur Längen- bzw. Höhenverstellung der Runge vorhanden. Die Runge ist damit an unterschiedliche Aufbauhöhen anpassbar und kann insbesondere beim Be- und Entladen von Waren bzw. Gütern auf eine maximale Höhe ausgefahren werden. Des Weiteren ist das im Hauptträger verschiebbare Trägerelemente über wenigstens einen Verriegelungsbolzen in seiner Längsausrichtung am Hauptträger lösbar verriegelbar. Dies ist einfach zu handhaben, robust und gleichzeitig günstig zu fertigen.

Falls das erfindungsgemäße Rungensystem einen Hauptträger mit wenigstens zwei Lochreihen aufweist, die sich vorzugsweise in voneinander abgewandten Seitenwandungen des Hauptträgers befinden, können Seitenbretter einfach und sicher, aber gleichzeitig stabil vorzugsweise in Richtung zum Vorder- und/oder zum Heckende des Aufbaus gerichtet gehalten werden. Mit anderen Worten lassen sich an einer Runge mehrere Seitenbretter in verschiedenen Höhen ein- oder beidseitig der Runge lösbar anordnen.

Eine weitere bevorzugte Ausführungsform eines erfindungsgemäßen Rungensystems zeichnet sich dadurch aus, dass der Verriegelungsbolzen einen Bolzenschaft aufweist, der einen Durchmesser hat, der kleiner ist als die Langlochbreite eines Langlochs der Lochreihe in dem Hauptträger. An einem Ende des Bolzenschaftes ist ein Bolzenkopf vorhanden, der einen Durchmesser hat, der ebenfalls kleiner ist als die Langlochbreite eines Langlochs der wenigstens einen Lochreihe. Damit ist einfache, stabile und kostengünstige Verriegelung erzielbar.

Eine in der Herstellung günstige, gleichzeitig aber auch stabile Ausgestaltung eines erfindungsgemäßen Rungensystems sieht vor, dass der Hauptträger einen im Wesentlichen U-förmigen Querschnitt aufweist und die Lochreihen sich in den beiden voneinander beabstandeten Seitenwandungen des U-Profils befinden. Ferner ist das verschiebbar angeordnete Trägerelement zwischen den beiden Seitenwandungen des U-Profils oder auch W-Profils geführt und an einem Ende des Trägerelements ein Laufwagen vorhanden, um die Runge in einer Laufschiene des Aufbaus des Nutzfahrzeug- oder Anhängerdachaufbaus zu verschieben und an gewünschter Position anzuordnen. Insbesondere ist ein Hebelmechanismus am unteren Ende des Hauptträgers angeordnet, mit dem die Runge am unteren Ende mit einem Fahrzeugrahmenteil verriegelbar ist. Der Hebelmechanismus ist derart ausgebildet, dass er in verriegelter Stellung zwischen den Seitenwänden des U-Profils untergebracht ist, ohne dass ein Teil des Hebelmechanismus über den Hauptträger zur Außenseite hin vorsteht.

Eine Bretttasche zum Einhängen in eine Runge eines hier offenbarten Rungensystems umfasst einen Brettaufnahmekörper, der einander gegenüberliegende, voneinander beabstandete Seitenwände und einen Boden sowie eine Stirnwand aufweist, die einen in Benutzungsposition nach oben und von der Stirnwand abgewandt offenen Aufnahmeraum für wenigstens ein Seitenbrett begrenzen. Es sind wenigstens zwei an der Stirnwand des Brettaufnahmekörpers angeordnete Einhängebolzen vorhanden, wovon jeder einen Bolzenschaft aufweist, der einen Bolzenschaftdurchmesser hat, der kleiner ist als die Langlochbreite eines Langlochs. Am Ende des Bolzenschaftes ist ein Bolzenkopf ausgebildet, der einen Kopfdurchmesser hat, der größer ist als der Bolzenschaftdurchmesser, aber kleiner als der Lochdurchmesser und größer als die Langlochbreite eines Lochs der Lochreihe im Hauptträger ist.

Vorzugsweise ist der Brettaufnahmekörper durch Umformen aus einem einteiligen Blechteil geformt, was eine äußerst kostengünstige Herstellung bei großer Stabilität erlaubt.

Ein weiterer Aspekt der vorliegenden Erfindung betrifft eine Runge zur Verwendung in einem Rungensystem der hierin offenbarten Art. Die erfindungsgemäße Runge besitzt einen länglichen Hauptträger, der in seiner Längsrichtung verlaufend wenigstens eine Lochreihe mit mehreren schlüssellochförmigen Löchern aufweist. Die Löcher setzen sich jeweils aus einem Kreisloch mit einem Lochdurchmesser und einem Langloch mit einer Langlochbreite, die kleiner ist als der Lochdurchmesser, zusammensetzen. Es ist zudem im Hauptträger in Längsrichtung verschiebbar angeordnetes Trägerelement zur Längen- bzw. Höhenverstellung der Runge vorhanden. Das im Hauptträger verschiebbar angeordnete Trägerelement ist über wenigstens einen Verriegelungsbolzen in seiner Längsausrichtung am Hauptträger lösbar verriegelbar.

Das Trägerelement ist dabei vorzugsweise über ein elastisches Element wie z.B. eine Feder oder einen Gummizug an einem Kopfende des Hauptträgers verschiebbar gelagert. Durch das elastische Element wird in senkrechter Benutzungsstellung der Runge gewährleistet, dass der Hauptträger nicht versehentlich beim Verändern der Länge der Runge vom Trägerelement herunterfällt und eventuell einen Bediener während des Einstellens der Runge verletzt. Der Hauptträger ist über das elastische Element mit dem Trägerelement verbunden. Da das Trägerelement in der Laufschiene befestigt ist, erfolgt ein Verstellen der Rungenlänge durch Herunterziehen des Hauptträgers entgegen der Federkraft und Eindrücken eines Hebels. Gleichzeitig ist aber auf einfache Art und Weise trotzdem über z.B. einen Verriegelungsbolzen die Lage des Trägerelements relativ zum Hauptträger festlegbar. Normalerweise erfolgt ein Verstellen der Rungenlänge durch Öffnen des Hebelmechanismus am Rungenfuß. Dadurch wir der Rungenfuß von der Bodenanschlussleiste bzw. einem am Ladeboden vorgesehenen Öffnungsabschnitt gelöst. Dann wird die Rungenlänge über den Verriegelungsbolzen eingestellt und die Runge in der eingestellten Länge mittels des Hebelmechanismus am Rungenfuß wieder verriegelt.

Vorzugsweise weist der Verriegelungsbolzen einen Bolzenschaft auf, der einen Schaftdurchmesser hat, der kleiner ist als die Langlochbreite eines Langloches der Lochreihe in dem Hauptträger. An einem Ende des Bolzenschaftes ist ein Bolzenkopf vorhanden, der einen Kopfdurchmesser hat, der kleiner ist als der Bolzenschaftdurchmesser und kleiner ist als die Langlochbreite eines Langlochs der Lochreihe. Mit diesem Verriegelungsbolzen wird der Abstand zwischen dem Trägerelement und dem Hauptträger eingestellt und damit die Rungenlänge.

Beispielsweise weist bei der erfindungsgemäßen Runge der Hauptträger einen im Wesentlichen U-förmigen Querschnitt aufweist und die Lochreihen befinden sich in den beiden Seitenwandungen des U-Profils. Ferner ist das verschiebbar angeordnete Trägerelement zwischen den beiden Seitenwandungen des U-Profils geführt. An einem Ende ist ein Laufwagen vorhanden, um die Runge in einer Laufschiene des Aufbaus des Nutzfahrzeug- oder Anhängerdachaufbaus zu verschieben und an gewünschter Position anzuordnen.

Vorzugsweise ist in einem Ausführungsbeispiel einer erfindungsgemäßen Runge ein Hebelmechanismus am unteren Ende des Hauptträgers angeordnet, mit dem die Runge am unteren Ende mit einem Fahrzeugrahmenteil verriegelbar ist. Der Hebelmechanismus ist in verriegelter Stellung zwischen den Seitenwänden des U-Profils untergebracht, ohne dass ein Teil des Hebelmechanismus über den Hauptträger zur Außenseite hin vorsteht.

In einer weitere beispielhaften Ausführungsform einer erfindungsgemäßen Runge weist der Hauptträger wenigstens zwei Lochreihen auf, die jeweils dazu ausgebildet sind, eine oder mehrere Bretttaschen darin mittels Einhängebolzen einzuhängen.

### Kurze Beschreibung der Zeichnungen

Fig. 1 eine perspektivische Seitenansicht eines Sattelanhängers mit erfindungsgemäßen Rungensystem,
Fig. 2 eine Seitenansicht auf eine erfindungsgemäße Runge,
Fig. 3 ein unteres Detail einer erfindungsgemäßen Runge mit Hebelmechanismus,
Fig. 4 und 5 Detailansichten gemäß der Fig. 3 mit unterschiedlichen Stellungen eines Verschlusshebels,
Fig. 6 eine Draufsicht auf einen Hauptträger einer erfindungsgemäßen Runge,
Fig. 7 eine Seitenansicht auf einen Hauptträger einer erfindungsgemäßen Runge,
Fig. 8 eine Draufsicht auf ein noch nicht gebogenes bzw. umgeformtes Blech eines Hauptträgers für eine erfindungsgemäße Runge,
Fig. 9 eine perspektivische Ansicht eines Teils eines Hauptträgers einer erfindungsgemäßen Runge,

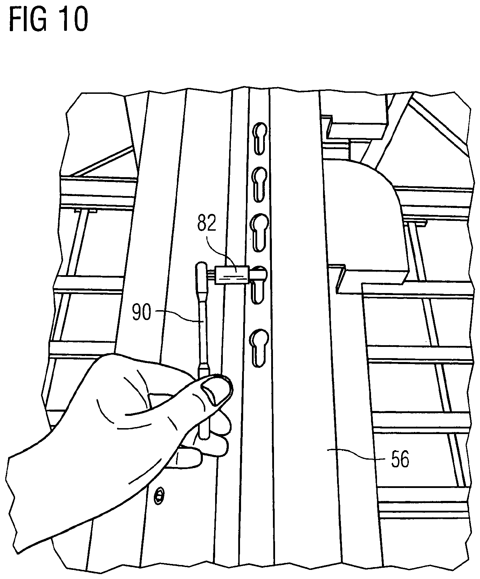

Fig. 10 ein Ausschnitt eines Teils einer erfindungsgemäßen Runge beim Einstecken eines Verriegelungsbolzens,
Fig. 11 eine perspektivische Ansicht einer Bretttasche,
Fig. 12 eine perspektivische Ansicht einer erfindungsgemäßen Runge,
Fig. 13 eine perspektivische Ansicht einer Bretttasche,
Fig. 14 ein Blech vor dem Umformen zu einer Bretttasche,
Fig. 15 eine Seitenansicht einer Bretttasche,
Fig. 16 eine vergrößerte Darstellung eines Einhängebolzens für eine Bretttasche.

### Detaillierte Beschreibung von Ausführungsbeispielen der Erfindung

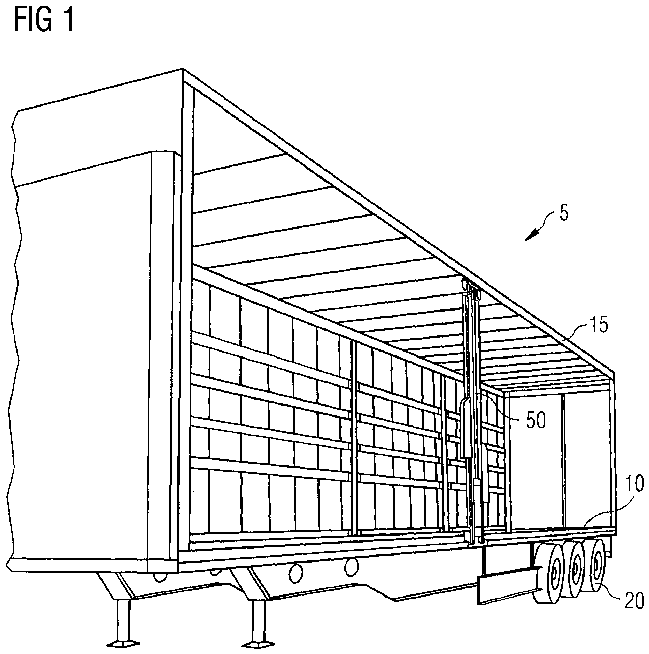

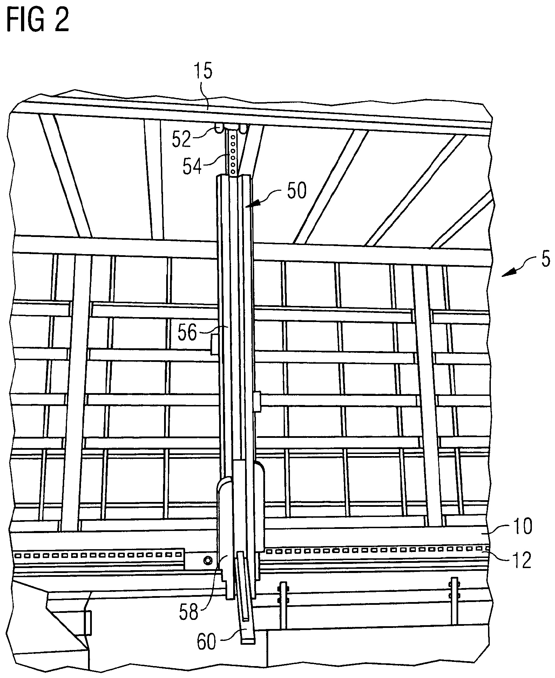

In der Fig. 1 ist in Form eines Sattelanhängers 5 ein Beispiel eines Nutzfahrzeugs oder Anhängeraufbaus gezeigt. Der Sattelanhänger bzw. dessen Aufbau umfasst hier ein Fahrwerk mit Rädern 20 und einen Ladenboden 10. Ein Dach wird randseitig durch eine Laufschiene 15 begrenzt. Zwischen der dachseitigen Laufschiene 15 und dem Ladeboden 10 bzw. einer seitlicheren angeordneten Bodenlochleiste 12 erstreckt sich eine erfindungsgemäße Runge 50. Wie insbesondere aus den weiteren Figuren 2 bis 5 entnommen werden kann, ist die erfindungsgemäße Runge 50 in Längsrichtung des Sattelanhängers 5 mittels eines Laufwagens 52 verschiebbar und an geeigneter Stelle arretierbar.

Unter Bezugnahme auf die Fig. 2 wird der grundsätzliche Aufbau einer erfindungsgemäßen Runge 50 bzw. eines erfindungsgemäßen Rungensystems erläutert. Die Runge 50 umfasst einen länglichen Hauptträger 56, der sich in der Darstellung der Fig. 2 vertikal erstreckt. Innerhalb des Hauptträgers 56 ist ein Trägerelement 54 längs verschieblich gelagert, um die Gesamthöhe der Runge 50 verstellen zu können. Das Trägerelement 54 weist an seinem Kopfende den Laufwagen 52 auf, der mittels Laufrollen 53 in der dachseitigen Laufschiene 15 bei bodenseitiger Entriegelung rollbar ist. Am bodenseitigen Ende der Runge 50 ist ein Bodenanschlusselement 58 angeordnet, an das über einen Verriegelungsmechanismus 60, 62der Rungenfuß lösbar fixierbar ist.

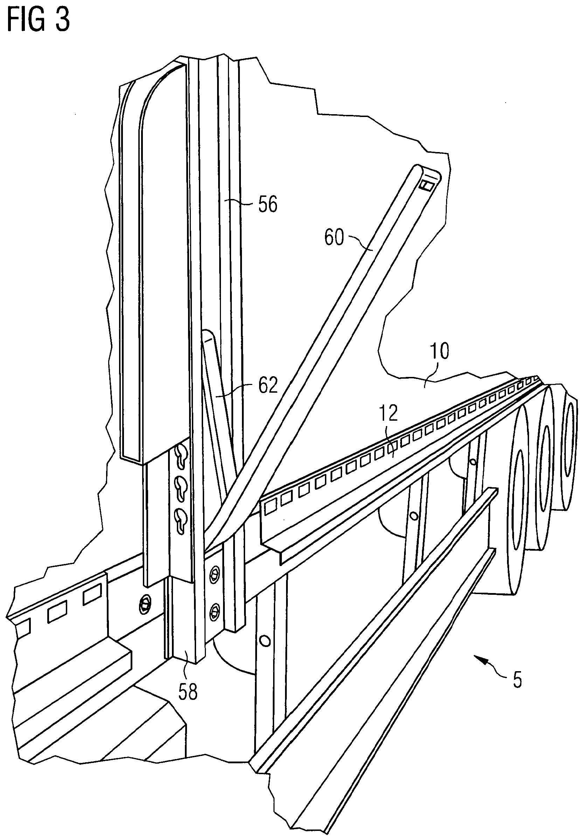

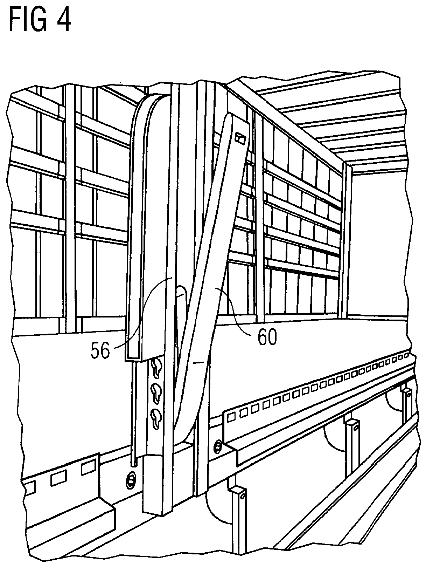

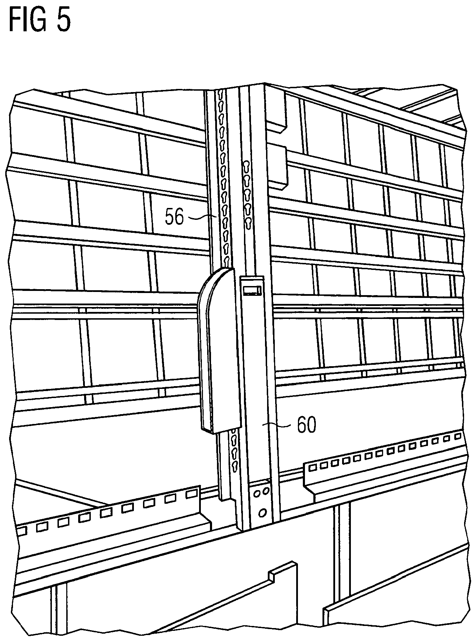

In der Fig. 3 ist eine perspektivische Ansicht des bodenseitigen Teils der erfindungsgemäßen Runge 50 gezeigt. Hier ist der Verriegelungshebel 60 nach außen gedrückt. Der Verriegelungshebel 60 ist am Bodenanschlusselement 58 der Runge 50 schwenkbar gelagert. Am Verriegelungshebel 60 ist wiederum ein Hebelumlenker 62 angelenkt, der in dem Hauptträger 56 der Runge 50 gelagert ist. Bei der in der Fig. 3 gezeigten Darstellung wird der untere Teil der Runge 50 von dem Bodenanschlusselement 58 entriegelt. Durch Verschwenken des Verriegelungshebels 60 in Richtung des Hauptträgers 56 wird über den Hebelumlenker 62 eine hier nicht näher dargestellte Verriegelung mit dem Bodenanschlusselement 58 erzielt. Entsprechende verschiedene Stellungen des Verriegelungshebels 60 sind in den Figuren 4 und 5 gezeigt. Hervorzuheben ist, dass in verriegelter Stellung gemäß der Fig. 5 der Verriegelungshebel 60 und der Hebelumlenker 62 derart in dem Hauptträger 56 versenkt sind, dass diese nicht über die Außenseite des Hauptträgers 56 vorstehen, also insbesondere keine hervorstehenden Teile in Richtung einer später noch seitlich anzubringenden Plane vorstehen.

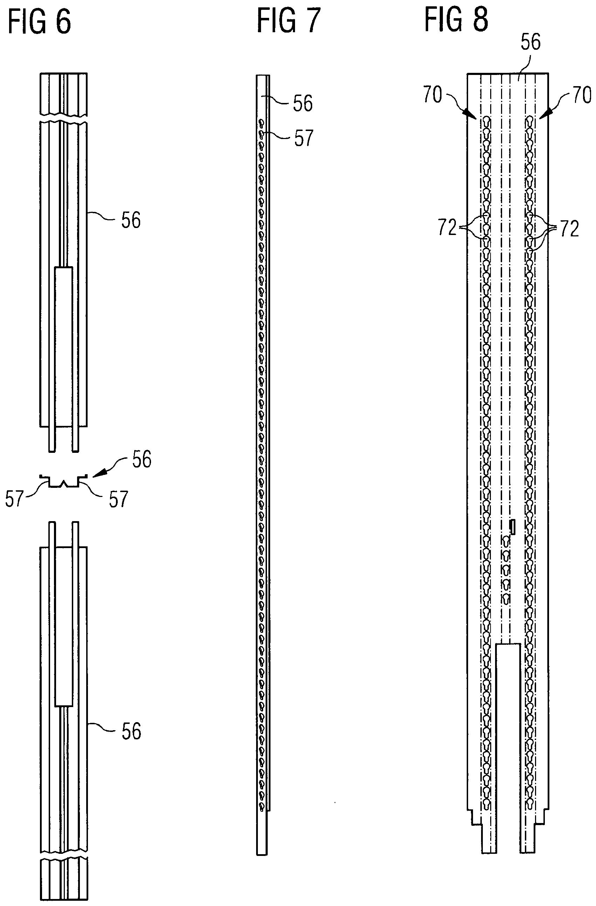

In den Figuren 6 bis 8 ist der Hauptträger 56 einer erfindungsgemäßen Runge im Einzelnen gezeigt. Wie insbesondere aus der mittigen Querschnittsansicht der Fig. 6 hervorgeht, ist der Hauptträger 56 aus einem Blech geformt, das im Wesentlichen U- bzw. mit den Randflügeln W-förmig ist. Durch diese Form sind Seitenwandungen 57 beidseits des Mittelteils des U-Profils des Hauptträgers 56 gebildet, in denen Lochreihen 70 vorhanden sind. Die Lochreihen 70 bestehen jeweils aus einer Vielzahl von gleichmäßig beabstandeten schlüsselförmigen Löchern 72, wie es insbesondere aus der Fig. 7 und 8 ersichtlich ist. Die einzelnen schlüsselochförmigen Löcher setzen sich aus einem Kreisloch 73 und einem Langloch 74 zusammen.

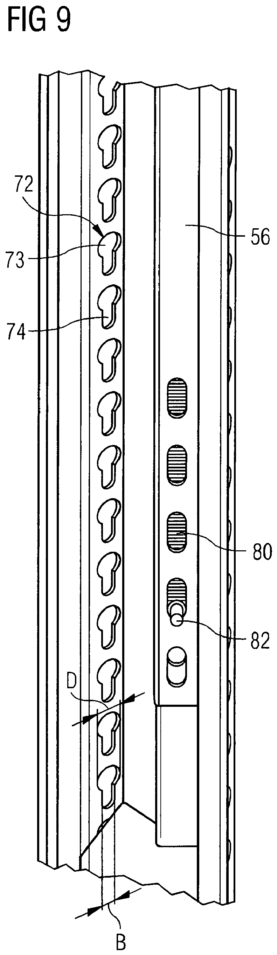

Wie aus der perspektivischen Ansicht der Fig. 9 ersichtlich ist, weist ein Kreisloch 73 einen Durchmesser D auf und die Breite eines Langlochs 74 ist mit "B" bezeichnet.

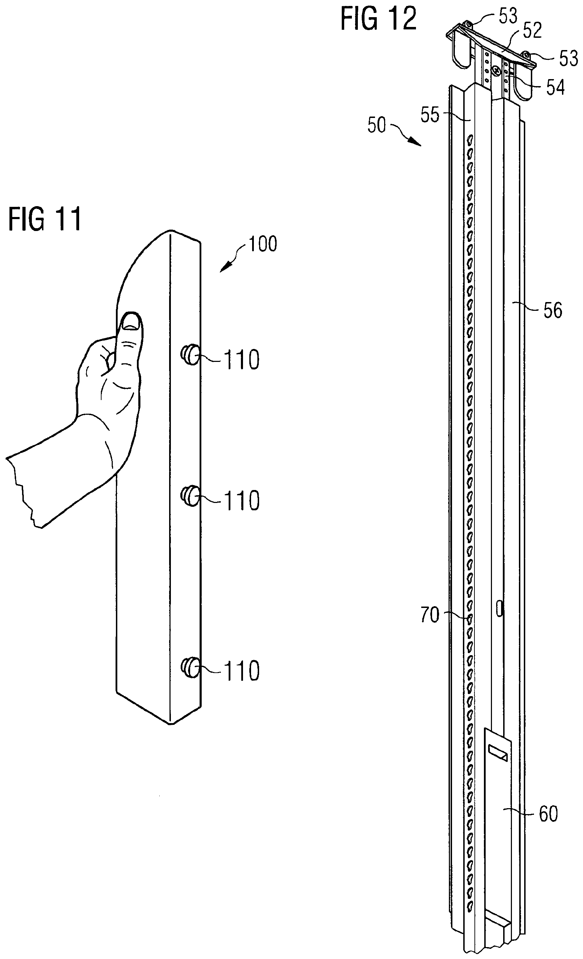

Die in der Fig. 8 gezeigte Draufsicht auf ein Blech für einen Hauptträger 56 zeigt dieses in noch nicht verformtem Zustand, jedoch mit bereits eingebrachten Lochreihen 70. Durch Kanten und Biegen wird dieses Blech in den Profilquerschnitt gemäß der Fig. 6 verformt. Diese Art der Ausgestaltung schafft eine kostengünstige und äußerst stabile Runge 50, die auch gleichzeitig gewährt, dass Bretttaschen in die Löcher der Lochreihen 70 einhängbar sind. Zu diesen Bretttaschen 100 wird später noch anhand der Figuren 11 und 13-16 verwiesen.

Anzumerken ist, dass in der Fig. 9 noch ein als Abstandshalter dienendes Metallrohr 80 gezeigt ist, das zur Längenverstellung das Trägerelement 54 in Bezug auf den Hauptträger 56 dient. Ein Verriegelungsbolzen 82 erlaubt mittels eines Werkzeugs 90 die Fixierung in der gewünschten Position des Trägerelements 54 gegenüber dem Hauptträger 56, das heißt die Höhenverstellbarkeit der Runge 50.

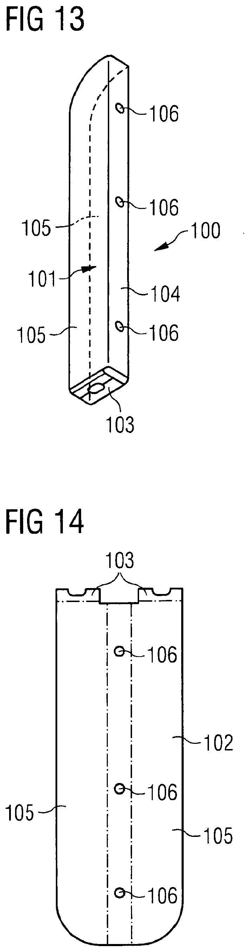

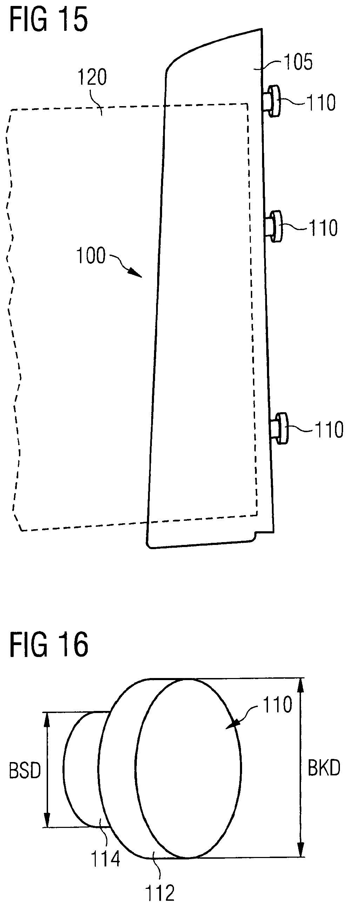

In der Fig. 11 ist eine perspektivische Ansicht einer Bretttasche 100 gezeigt. Diese Bretttasche 100 wird mittels Einhängebolzen 110 in eine Lochreihe 70 durch Einführen der Einhängebolzen 100 in die kreisrunden Löcher 73 und Nachuntenziehen in die Langlöcher 74 lösbar befestigt. Eine Bretttasche 100 weist, wie insbesondere in den Fig. 13-16 ersichtlich ist, eine Stirnwand 104, einen Boden 103 sowie Seitenwände 105 auf. Die Bretttasche bildet somit einen nach oben und seitlich offenen Aufnahmeraum 105 für ein Seitenbrett 120, wie es schematisch in der Fig. 15 gezeigt ist. Der Zuschnitt eines Blechs für eine Bretttasche 100 ist in der Fig. 14 in noch unverformten Zustand gezeigt. Durch Kanten anhand der in der Fig. 14 strichpunktierten Linien wird der endgültige Zustand der Bretttasche 100 gemäß der Fig. 13 bzw. 15 erzielt. Die Einhängebolzen 110 werden in die Löcher 106 in der Stirnwand 104 eingefügt und dort verschweißt oder verschraubt. Die Einhängebolzen 110 sind dabei so gegenüber der Stirnwand 104 positioniert, dass der Bolzenschaft 114 über die Stirnwand 104 hervorsteht. Der Bolzenkopf 112 hat also einen Abstand zur Stirnwand 104. Der Bolzenkopf 112 hat einen Bolzenkopfdurchmesser BKD der größer ist als der Bolzenschaftdurchmesser BSD. Der Bolzenkopfdurchmesser BKD ist kleiner als der Kreislochdurchmesser D eines Kreislochs 73 einer Langlochreihe 70. Gleichzeitig ist der Bolzenkopfdurchmesser BKD größer als die Breite B eines Langlochs 74. Der Bolzenschaftdurchmesser BSD wiederum ist kleiner als die Breite B eines Langlochs 74. Folglich kann jeweils ein Bolzenkopf 112 in ein Kreisloch 73 eingeführt werden und dann nach unten verschoben werden, so dass der Bolzenkopf 112 hinter dem Langloch 74 zum Liegen kommt und damit eine Bretttasche 100 in einfacher und sehr stabiler Weise in einer Runge 50 an gewünschter Stelle einhängbar ist.

Damit lassen sich somit Seitenbretter 120 zur seitlichen Sicherung am Anhänger 5 in gewünschter Höhe anordnen.

## Patentansprüche

1. Rungensystem für einen Nutzfahrzeug- oder Anhängerdachaufbau (5), mit:
- einer Runge (50) mit einem länglichen Hauptträger (56), der in Längsrichtung des Hauptträgers (56) ausgerichtet wenigstens eine Lochreihe (70) mit mehreren schlüssellochförmigen Löchern (72) aufweist, die sich jeweils aus einem Kreisloch (73) mit einem Lochdurchmesser (LD) und einem Langloch (74) mit einer Breite (LB), die kleiner ist als der Lochdurchmesser (D), zusammensetzen, und
- wenigstens einer in die Runge (50) mittels wenigstens zwei Einhängebolzen (110) einhängbaren Bretttasche (100) für ein Seitenbrett (120) des Aufbaus (5), wobei jeder Einhängebolzen (110) einen Bolzenschaft (114) aufweist, der einen Bolzenschaftdurchmesser (BSD) hat, der kleiner ist als die Langlochbreite (B) eines Langlochs (74), und am Ende des Bolzenschaftes (114) ein Bolzenkopf (112) vorhanden ist, der einen Kopfdurchmesser (BKD) hat, der größer ist als der Bolzenschaftdurchmesser (BSD), aber kleiner als der Lochdurchmesser (D) und größer als die Langlochbreite (B) eines Lochs (72) der Lochreihe (70) im Hauptträger (56) ist,
- einem im Hauptträger (56) in Längsrichtung verschiebbar angeordneten Trägerelement (54) zur Längen- bzw. Höhenverstellung der Runge (50),
wobei das im Hauptträger (56) verschiebbare Trägerelement (54) über wenigstens einen Verriegelungsbolzen (82) in seiner Längsausrichtung am Hauptträger (56) lösbar verriegelbar ist.

2. Rungensystem nach Anspruch 1, bei dem der Hauptträger (56) wenigstens zwei Lochreihen (70) aufweist, die sich vorzugsweise in voneinander abgewandten Seitenwandungen (55) des Hauptträgers (56) befinden.

3. Rungensystem nach einem der voranstehenden Ansprüche, bei dem der Verriegelungsbolzen (82) einen Bolzenschaft aufweist, der einen Durchmesser hat, der kleiner ist als die Langlochbreite (B) eines Langlochs (74) der Lochreihe (70) in dem Hauptträger (56), und an einem Ende des Bolzenschaftes ein Bolzenkopf angeordnet ist, der einen Durchmesser hat, der kleiner ist als der Durchmesser des Bolzenschaftes des Verriegelungsbolzens (82) und ebenfalls kleiner ist als die Langlochbreite (B) eines Langlochs (74) der wenigstens einen Lochreihe (70), insbesondere ist der Verriegelungsbolzen mit zwei Abschnitten mit kleinem Durchmesser und einem dazwischen angeordneten Abschnitt mit größerem Durchmesser ausgebildet, wobei der Abschnitt mit größerem Durchmesser als Auflage für einen Abstandshalter (80) dient.

4. Rungensystem nach einem der Ansprüche 1-3, bei dem der Hauptträger (56) einen im Wesentlichen U-förmigen oder W-förmigen Querschnitt aufweist und die Lochreihen (70) sich in den beiden Seitenwandungen (55) des U-Profils befinden, und ferner das verschiebbar angeordnete Trägerelement (54) zwischen den beiden Seitenwandungen (55) des U-Profils geführt ist und an einem Ende einen Laufwagen (52) aufweist, um die Runge (50) in einer Laufschiene (15) des Nutzfahrzeug- oder Anhängerdachaufbaus (5) zu verschieben und an gewünschter Position anzuordnen, wobei insbesondere ein Hebelmechanismus (60, 62) am unteren Ende des Hauptträgers (56) angeordnet ist, mit dem die Runge (50) am unteren Ende mit einem Bodenanschlusselement (58) verriegelbar ist, und der Hebelmechanismus (60, 62) in verriegelter Stellung zwischen den Seitenwandungen (55) des U-Profils untergebracht ist, ohne dass ein Teil des Hebelmechanismus (60, 62) über den Hauptträger (56) zur Außenseite hin vorsteht.

5. Runge (50) zur Verwendung in einem Rungensystem nach einem der Ansprüche 1-4, mit
- einem länglichen Hauptträger (56), der in seiner Längsrichtung verlaufend wenigstens eine Lochreihe (70) mit mehreren Löchern (72) aufweist und die Löcher (72) sich jeweils aus einem Kreisloch (73) mit einem Lochdurchmesser (LD) und einem Langloch (74) mit einer Langlochbreite (LB), die kleiner ist als der Lochdurchmesser (LD) ist, zusammensetzen,
- einem im Hauptträger (56) in Längsrichtung verschiebbar angeordneten Trägerelement (54) zur Längen- bzw. Höhenverstellung der Runge (50),
wobei das im Hauptträger (56) verschiebbar angeordnete Trägerelement (54) über wenigstens einen Verriegelungsbolzen (82) im Hauptträger (56) lösbar verriegelbar ist.

6. Runge (50) nach Anspruch 5, bei dem der Verriegelungsbolzen (82) einen Bolzenschaft aufweist, der einen Durchmesser hat, der kleiner ist als die Langlochbreite (B) eines Langlochs (74) der Lochreihe (70) in dem Hauptträger (56), und an einem Ende des Bolzenschaftes ein Bolzenkopf angeordnet ist, der einen Durchmesser hat, der kleiner ist als der Durchmesser des Bolzenschaftes des Verriegelungsbolzens (82) und ebenfalls kleiner ist als die Langlochbreite (B) eines Langlochs (74) der wenigstens einen Lochreihe (70), insbesondere ist der Verriegelungsbolzen mit in zwei Abschnitten mit kleinem Durchmesser und einem dazwischen angeordneten Abschnitt mit größerem Durchmesser ausgebildet, wobei der Abschnitt mit größerem Durchmesser als Auflage für einen Abstandshalter (80) dient.

7. Runge (50) nach Anspruch 6, bei dem der Hauptträger (56) einen im Wesentlichen U-förmigen Querschnitt aufweist und die Lochreihen (70) sich in den beiden Seitenwandungen (55) des U-Profils befinden, und ferner das verschiebbar angeordnete Trägerelement (54) zwischen den beiden Seitenwandungen (55) des U-Profils geführt ist und an einem Ende einen Laufwagen (52) aufweist, um die Runge (50) in einer Laufschiene (15) des Nutzfahrzeug- oder Anhängerdachaufbaus (5) zu verschieben und an gewünschter Position anzuordnen, wobei insbesondere ein Hebelmechanismus (60, 62) am unteren Ende des Hauptträgers (56) angeordnet ist, mit dem die Runge (50) am unteren Ende mit einem Bodenanschlusselement (58) verriegelbar ist, und der Hebelmechanismus (60, 62) in verriegelter Stellung zwischen den Seitenwandungen (55) des U-Profils untergebracht ist, ohne dass ein Teil des Hebelmechanismus (60, 62) über den Hauptträger (56) zur Außenseite hin vorsteht.

8. Runge (50) nach einem der Ansprüche 5-7, bei dem der Hauptträger (56) wenigstens zwei Lochreihen (70) aufweist, die jeweils dazu ausgebildet sind, eine oder mehrere Bretttaschen (100) darin mittels Einhängebolzen (110) einzuhängen.

## Claims

1. A stanchion system for a commercial vehicle bodywork or trailer roof bodywork (5), comprising:
- a stanchion (50) provided with an elongate main beam (56) with at least one row of holes (70) aligned in the longitudinal direction of the main beam (56), the row of holes comprising a plurality of keyhole-shaped holes (72), each consisting of a circular hole (73) having a hole diameter (LD), and an elongated hole (74) having a width (LB) smaller than the hole diameter (D), and
- at least one board support (100) for a side board (120) of the body work (5), which board support can be hooked up in the stanchion (50) by means of two suspension bolts (110), wherein each suspension bolt (110) is provided with a bolt shank (114) having a bolt shank diameter (BSD) smaller than the width (B) of an elongate hole (74), the end of the bolt shank (114) being provided with a bolt head (112) having a head diameter (BKD) greater than the bolt shank diameter (BSD), but smaller than the hole diameter (D) and larger than the slot width (B) of a hole (72) of the row of holes (70) in the main beam (56),
- a carrier element (54), which is arranged in the main beam (56) and slidable in the longitudinal direction for length and height adjustment, respectively, of the stanchion (50),
wherein the carrier element (54), which is slidable arranged in the main beam (56), can be releasably locked in its longitudinal direction with the main beam (56) by means of at least one locking bolt (82).

2. The stanchion system according to claim 1, wherein the main beam (56) is provided with at least two rows of holes (70), the holes preferably being arranged on side walls (55) of the main beam (56), which side walls face away from each other.

3. The stanchion system according to any one of the preceding claims, wherein the locking bolt (82) comprises a bolt shank having a diameter smaller than the slot width (B) of an elongate hole (74) of the row of holes (70) in the main beam (56), and wherein, at one end of the bolt shank, a bolt head having a diameter smaller than the diameter of the bolt shank of the locking bolt (82), and also smaller than the slot width (B) of an elongate hole (74) of the at least one row of holes (70) is arranged, wherein, in particular, the locking bolt is formed with two small diameter sections and one larger diameter section interposed therebetween, the larger diameter section serving as a supporting surface for a spacer (80).

4. The stanchion system according to any one of claims 1-3, wherein the main beam (56) has a substantially U-shaped or W-shaped cross-section and the rows of holes (70) are located in the two side walls (55) of the U-profile, and wherein the slidably arranged carrier element (54) is guided between the two side walls (55) of the U-profile and provided with a carriage (52) at its one end, for sliding the stanchion (50) in a sliding rail (15) of the commercial vehicle work bodywork or trailer roof bodywork (5) and arranging the same at a desired position, wherein, in particular, a lever mechanism (60, 62) is arranged at the lower end of the main beam (56), by means of which lever mechanism the stanchion (50) can be locked to a bottom connection element (58), and wherein, in its locked position, the lever mechanism (60, 62) is accommodated between the side walls (55) of the U-profile in such a manner that no part of the lever mechanism (60, 62) protrudes to the outside from the main beam (56).

5. A stanchion (50) for use in a stanchion system according to any one of claims 1-4, comprising
- an elongated main body (56), which, in its longitudinal direction, is provided with at least one row of holes (70) having a plurality of holes (72), the holes (72) respectively comprising a circular hole (75) with a hole diameter (LD) and an elongate hole (74) with a slot width (LB) smaller than the elongate hole diameter (LD),
- a carrier element (54), which is arranged in the main beam (56) and slidable in the longitudinal direction for length and height adjustment, respectively, of the stanchion (50),
wherein the carrier element (54), which is slidably arranged in the main beam (56), can be releasably locked with the main beam (56) by means of at least one locking bolt (82).

6. The stanchion (50) according to claim 5, wherein the locking bolt (82) comprises a bolt shank having a diameter smaller than the slot width (B) of an elongate hole (74) of the row of holes (70) in the main beam (56), and wherein, at one end of the bolt shank, a bolt head having a diameter smaller than the diameter of the bolt shank of the locking bolt (82), and also smaller than the slot width (B) of an elongate hole (74) of the at least one row of holes (70) is arranged, wherein, in particular, the locking bolt is formed with two small diameter sections and one larger diameter section interposed therebetween, the larger diameter section serving as a supporting surface for a spacer (80).

7. The stanchion (50) according to claim 6, wherein the main beam (56) has a substantially U-shaped cross-section and the rows of holes (70) are located in the two side walls (55) of the U-profile, and wherein the slidably arranged carrier element (54) is guided between the two side walls (55) of the U-profile and provided with a carriage (52) at its one end, for sliding the stanchion (50) in a sliding rail (15) of the commercial vehicle bodywork or trailer roof bodywork (5) and arranging the same at a desired position, wherein, in particular, a lever mechanism (60, 62) is arranged at the lower end of the main beam (56), by means of which lever mechanism the stanchion (50) can be locked to a bottom connection element (58), and wherein, in its locked position, the lever mechanism (60, 62) is accommodated between the side walls (55) of the U-profile in such a manner that no part of the lever mechanism (60, 62) protrudes to the outside from the main beam (56).

8. The stanchion (50) according to any one of claims 5-7, wherein the main beam (56) is provided with at least two rows of holes (70), each being formed for hooking up at least one board support (100) by means of suspension bolts (110).

## Revendications

1. Système de montant pour une structure de toit de véhicule utilitaire ou de remorque (5), comprenant :
- un montant (50) avec une poutre maîtresse longitudinale (56), qui présente, orientée dans la direction longitudinale de la poutre maîtresse (56), au moins une série de trous (70) avec plusieurs trous en forme de trou de serrure (72), qui se composent respectivement d'un trou circulaire (73) avec un diamètre de trou (LD) et d'un trou allongé (74) d'une largeur (LB) qui est plus petite que le diamètre de trou (D) et
- au moins une poche à planche (100) qui peut être suspendue dans le montant (50) au moyen d'au moins deux boulons de suspension (110) pour une planche latérale (120) de la structure (5), dans lequel chaque boulon de suspension (110) présente une tige de boulon (114) qui a un diamètre (BSD) qui est plus petit que la largeur de trou allongé (B) d'un trou allongé (74) et à l'extrémité de la tige de boulon (114) est présente une tête de boulon (112) qui a un diamètre de tête (BKD), qui est plus grand que le diamètre de tige de boulon (BSD), mais plus petit que le diamètre de trou (D) et plus grand que la largeur de trou allongé (B) d'un trou allongé (72) de la série de trous (70) dans la poutre maîtresse (56),
- un élément de poutre (54) agencé mobile dans la poutre maîtresse (56) dans la direction longitudinale pour le déplacement en longueur ou en hauteur du montant (50),
dans lequel l'élément de poutre (54) mobile dans la poutre maîtresse (56) peut être verrouillé de manière amovible via au moins un boulon de verrouillage (82) dans sa direction longitudinale sur la poutre maîtresse (56).

2. Système de montant selon la revendication 1, dans lequel la poutre maîtresse (56) présente au moins deux séries de trous (70) qui se trouvent de préférence dans des parois latérales (55) opposées l'une à l'autre de la poutre maîtresse (56).

3. Système de montant selon l'une quelconque des revendications précédentes, dans lequel le boulon de verrouillage (82) présente une tige de boulon qui a un diamètre qui est plus petit que la largeur de trou allongé (B) d'un trou allongé (74) de la série de trous (70) dans la poutre maîtresse (56) et, à une extrémité de la tige de boulon, est agencée une tête de boulon qui a un diamètre qui est plus petit que le diamètre de la tige du boulon de verrouillage (82) et également plus petit que la largeur de trou allongé (B) d'un trou allongé (74) de la au moins une série de trous (70), le boulon de verrouillage étant en particulier formé avec deux sections de petit diamètre et une section agencée entre elles de plus grand diamètre, dans lequel la section de plus grand diamètre sert d'appui pour un dispositif d'écartement (80).

4. Système de montant selon l'une quelconque des revendications 1-3, dans lequel la poutre maîtresse (56) présente une section transversale sensiblement en forme de U ou en forme de W et les séries de trous (70) se trouvent dans les deux parois latérales (55) du profil en U et, en outre, l'élément de poutre agencé mobile (54) est guidé entre les deux parois latérales (55) du profil en U et présente à une extrémité un chariot (52) pour déplacer le montant (50) dans un rail de roulement (15) de la structure de toit (5) du véhicule utilitaire ou de la remorque et l'agencer dans une position souhaitée, dans lequel, en particulier, est agencé un mécanisme à levier (60, 62) à l'extrémité inférieure de la poutre maîtresse (56), avec lequel mécanisme le montant (50) peut être verrouillé à l'extrémité inférieure avec un élément de raccordement au sol (58) et le mécanisme à levier (60, 62) est implanté en position verrouillée entre les parois latérales (55) du profil en U sans qu'une partie du mécanisme à levier (60, 62) ne dépasse au-dessus de la poutre maîtresse (56) vers l'extérieur.

5. Montant (50) pour utilisation dans un système de montant selon l'une quelconque des revendications 1-4, comprenant
- une poutre maîtresse longitudinale (56), qui présente, s'étendant dans sa direction longitudinale, au moins une série de trous (70) avec plusieurs trous (72) et les trous (72) se composent respectivement d'un trou circulaire (73) avec un diamètre de trou (LD) et un trou allongé (74) avec une largeur de trou allongé (LB) qui est plus petite que le diamètre de trou (LD),
- un élément de poutre (54) agencé mobile dans la poutre maîtresse (56) dans la direction longitudinale pour déplacer en longueur ou en hauteur le montant (50),
dans lequel l'élément de poutre (54) agencé mobile dans la poutre maîtresse (56) peut être verrouillé de manière amovible via au moins un boulon de verrouillage (82) dans la poutre maîtresse (56).

6. Montant (50) selon la revendication 5, dans lequel le boulon de verrouillage (82) présente une tige de boulon qui a un diamètre qui est plus petit que la largeur de trou allongé (B) d'un trou allongé (74) de la série de trous (70) dans la poutre maîtresse (56) et il est agencé à une extrémité de la tige de boulon une tête de boulon qui a un diamètre qui est plus petit que le diamètre de la tige de boulon du boulon de verrouillage (82) et également plus petit que la largeur de trou allongé (B) d'un trou allongé (74) de la au moins une série de trous (70), en particulier le boulon de verrouillage est conçu avec deux sections de petit diamètre et une section agencée entre elles de plus grand diamètre, dans lequel la section de plus grand diamètre sert d'appui pour un dispositif d'écartement (80).

7. Montant (50) selon la revendication 6, dans lequel la poutre maîtresse (56) présente une section transversale sensiblement en forme de U et les séries de trous (70) se trouvent dans les deux parois latérales (55) du profil en U et, en outre, l'élément de poutre agencé mobile (54) est guidé entre les deux parois latérales (55) du profil en U et présente à une extrémité un chariot (52) pour déplacer le montant (50) dans un rail de roulement (15) de la structure de toit de véhicule utilitaire ou de remorque (5) et l'agencer en position souhaitée, dans lequel, en particulier, un mécanisme à levier (60, 62) est agencé à l'extrémité inférieure de la poutre maîtresse (56), avec lequel le montant (50) peut être verrouillé à l'extrémité inférieure avec un élément de raccordement au sol (58) et le mécanisme à levier (60, 62) est disposé en position verrouillée entre les parois latérales (55) du profil en U sans qu'une partie du mécanisme à levier (60, 62) ne dépasse au-dessus de la poutre maîtresse (56) vers l'extérieur.

8. Montant (50) selon l'une quelconque des revendications 5-7, dans lequel la poutre maîtresse (56) présente au moins deux séries de trous (70) qui sont respectivement conçues pour y suspendre une ou plusieurs poches à planche (100) au moyen de boulons de suspension (110).
